# EUROPÄISCHE PATENTSCHRIFT

(11) **EP 0 939 915 B1**
(45) Veröffentlichungstag und Bekanntmachung des Hinweises auf die Patenterteilung: **17.10.2001**
(21) Anmeldenummer: 97951085.6
(22) Anmeldetag: 24.11.1997
(51) Int. Cl.: G02B 6/44

(54) **OPTISCHE ANSCHLUSSDOSENANORDNUNG**
OPTICAL CONNECTOR BOX ARRANGEMENT
AGENCEMENT DE BOITE DE JONCTION OPTIQUE

(30) Priorität: 25.11.1996 DE 19648780
(43) Veröffentlichungstag der Anmeldung: 08.09.1999
(73) Patentinhaber: Telegärtner Gerätebau GmbH, 01774 Höckendorf (DE)
(72) Erfinder: OEHME, Hartmut, D-01738 Dorfhain (DE)
(74) Vertreter: Patentanwälte Lippert, Stachow, Schmidt & Partner
(86) Internationale Anmeldenummer: DE9702737
(87) Internationale Veröffentlichungsnummer: WO9823986

(56) Entgegenhaltungen:
- EP-A- 0 364 075
- DE-A- 3 900 021
- DE-C- 19 628 442
- DE-U- 29 608 029
- GB-A- 2 254 163

## Beschreibung

Die Erfindung betrifft eine optische Anschlußdosenanordnung zum vorzugsweisen Einbau in handelsübliche, für den Anschluß von elektrischen Leitungen vorgesehene Aufputz-, Unterputz- und Kanaldosen sowie in Gerätebecher, im wesentlichen bestehend aus einer Wanddose, einem Kabelführungseinsatz mit daran angeordneten Befestigungselementen, einem Abdeckrahmen und einer Anordnung zur Aufnahme der Lichtwellenleitersteckverbinder.

Lichtwellenleiterkabel finden immer häufigeren Einsatz vor allem in der Telekommunikationstechnik, der Nachrichtenübermittlung per Telefon, Funk und Fernsehen und der Computertechnik. Dabei müssen, wie bei Verwendung elektrischer Kabel üblich, die Lichtwellenleiterkabel bis unmittelbar vor Ort, das heißt bis in unmittelbare Nähe des Endgerätes verlegt werden. Um vorhandene Kabelkanäle bzw. Anschlußdosen auch für den Anschluß von Lichtwellenleierkabeln nutzen zu können, sind bereits Lösungen bekannt, bei denen mit Hilfe gesonderter Einsätze in vorhandene Unter- oder Aufputzdosen Lichtwellenleiteranschlüsse realisiert werden.

Die Schwierigkeit besteht dabei darin, daß die Lichtleiterfasern gegenüber elektrischen Kabeln mit Mindestbiegeradien zu verlegen sind und es bei Nichteinhaltung eines bestimmten Biegeradius des Kabels oder der Einzelleitung zur Zerstörung oder Beschädigung der Lichtleiterfasern kommt oder aber die Dämpfungswerte nicht gering genug gehalten werden können, was zu Störungen bei der Betreibung der angeschlossenen Geräte führen kann.

Als problematisch erwiesen hat sich auch, daß für Lichtwellenleiteranschlüsse immer eine gewisse Kabelreserve in der Dose vorhanden sein muß, um genügend Spielraum beim Anschließen der Lichtleiterfasern zu haben und um eventuelle Beschädigungen beim Anschließen der Kabel korrigieren zu können. Diese Kabelreserve sollte in der Regel bei ca. einem Meter Reservelänge liegen.

Außerdem müssen die Lichtwellenleiterkabel so angeschlossen sein, daß es weder im Kabelbereich noch im Anschlußbereich durch Zugbelastung oder bei der Herstellung der Verbindung zum Beschädigen der Lichtleiterfasern kommt. Auch das Verlegen der Lichtwellenleiterkabel in Kabelkanäle birgt die Gefahr von Beschädigungen in sich, wenn beispielsweise der Biegeradius des Kabels im Eingangsbereich dadurch zu gering ist, daß die Anschlüsse nicht in gleicher Richtung ausgeführt werden können. Werden weitere Manipulationen an anderen Leitungen im Kabelkanal vorgenommen, können durch Unachtsamkeit Glasfasern zerstört werden.

Bisher bekannte Lösungen verwenden zwar Einsätze, die das Anlegen einer genügend großen Faserreserve gestatten, allerdings ist der durch den Faserhersteller vorgegebene Mindestbiegeradius von 30 mm (im Extremfall 25 mm) mit diesen Lösungen nicht unter allen Installationsbedingungen einzuhalten. Das heißt, daß im ungünstigsten Fall der zulässige minimale Biegeradius unterschritten wird, so daß Fehlfunktionen der angeschlossenen Geräte bzw. Beschädigungen der Glasfasern nicht wirksam ausgeschlossen werden können.

Die Verwendung handelsüblicher elektrischer Installationssysteme auch für den Einsatz in der Lichtwellenleitertechnik, wie sie beispielsweise aus den Druckschriften DE 39 00 021 A1 und EP 0 364 075 bekannt ist, wird insbesondere aus designerischen Gründen angestrebt, da so beide Systeme nebeneinander eingesetzt werden können, ohne daß wesentliche Unterschiede in der Gestaltung der Anschlußdosen eintreten. Außderdem muß so nicht von vornherein genau festgelegt werden, wo Wanddosen für Elekrokabel und wo welche für Lichtwellenleiterkabel vorzusehen sind. Dadurch gestaltet sich sowohl die Elektrokabel- als auch die Lichtwellenleiterkabelinstallation wesentlich variabler. Die bekannten Lösungen weisen allerdings die bereits beschriebenen Nachteile auf, insbesondere was die Einhaltung des vorgegebenen Mindestbiegeradius betrifft.

Es ist deshalb Aufgabe der Erfindung, eine optische Anschlußdosenanordnung der vorbenannten Art zu schaffen, mit der trotz Verwendung vorhandener elektrischer Installationssysteme alle vorgegebenen Parameter der Lichtwellenleitertechnik eingehalten werden, insbesondere soll der vorgegebene Mindestbiegeradius für Lichtwellenleiterkabel bei genügend großer Faserreserve in der Wanddose nicht unterschritten werden und die Kabelzugentlastung gesichert sein.

Erfindungsgemäß wird die Aufgabe dadurch gelöst, daß die Wanddose als Doppeldose ausgebildet ist, in der der an Form und Größe der Doppeldose angepaßte Kabelführungseinsatz eingesetzt ist, der zusammen mit mindestens einer Anordnung zur Aufnahme von mindestens einem Steckverbinder die Anschlußdose in drei Aufnahmeräume trennt, einen unteren Kabelaufnahmeraum und einen mittleren Faseraufnahmeraum, die beide durch eine Trennplatte des Kabelführungseinsatzes gebildet werden, sowie einen oberen Anschlußraum, der zwischen der Anordnung zur Aufnahme wenigstens eines Lichtwellenleitersteckverbinders und dem Kabelführungseinsatz gebildet wird, daß der Kabelaufnahmeraum Zugentlastungsmittel und Halteelemente zur zugentlastenden Führung des Lichtwellenleiterkabels aufweist, daß der Faseraufnahmeraum mit Mitteln zur Aufnahme und Führung der Einzelfasern unter Bildung einer Kabelreserve ausgestattet ist, daß der Anschlußraum Mittel zur Führung der Einzelfasern zum und. zur Verbindung mit dem oder den jeweiligen Lichtwellenleitersteckverbindern aufweist, daß die Räume so ausgebildet sind, daß Kabel und Einzelfasern unter Einhaltung des vorgegebenen Mindestbiegeradius geführt werden und daß die Anordnung zur Aufnahme des oder der Steckverbinder auf dem Kabelführungseinsatz axial verschieb- und verdrehbar befestigt ist.

Mit dem Einsatz von Doppeldosen wird erreicht, daß sowohl das Lichtwellenleiterkabel als auch die Kabelreserve in der Anschlußdose untergebracht werden kann, so daß nach außenhin sichtbar nur noch die Lichtwellenleitersteckverbinder die Anschlußdose überragen. Dadurch wird es möglich, daß nicht nur übliche Wanddosen verwendet werden können, sondern auch die entsprechenden von außen sichtbaren Abdeckungen. Damit kann die Ausführung und äußere Gestaltung der elektrischen den optischen Installationssystemen weitestgehend angepaßt werden, so daß beide Systeme nebeneinander existieren können, ohne das Gesamtbild negativ zu beeinflussen.

Die Bildung von drei Räumen in der Wanddose erlaubt ein übersichtliches, einfaches und gut handhabbares Anschließen des Lichtwellenleiterkabels, Führen der Einzelleitungen zur Bildung einer Kabelreserve und Verbinden der Fasern mit den jeweiligen Steckverbindern. In der Anschlußdose ist ausreichend Platz vorhanden, um unter Einhaltung wenigstens des vorgegebenen Mindestbiegeradius die Fasern anzuschließen, so daß Beschädigungen von vorn herein vermieden werden können.

Nach einer vorzugsweisen Ausführungsform weist der Kabelführungseinsatz in seinem unteren Raum jeweils mindestens einen Kabeleingang, einen Durchgang zum Durchführen des Kabels oder der Einzelfasern in den mittleren Raum, ein am inneren Umfang angeordnetes Halteelement zur Führung und Halterung des Lichtwellenleiterkabels, ein Kabelzugentlastungselement und ein exzentrisch angeordnetes, zylinderförmiges Aufnahmeteil auf, das so in der Trennplatte zwischen unterem und mittlerem Raum angeordnet ist, daß das zylinderförmige Aufnahmeteil auch den mittleren Raum durchragt.

Der untere Raum des Kabelführungseinsatzes dient somit lediglich der Kabeleinführung, der Kabelpositionierung unter Einhaltung des Mindestbiegeradius und der Kabelzugentlastung. Das Kabel kann jeweils zwischen Dosenrand und Aufnahmeteil zum Durchgang geführt werden, wobei angeordnete Halteelemente das Kabel gegen die Trennplatte drücken, so daß ein sicherer Halt gewährleistet wird. Es müssen lediglich Führungselemente zur Kabelführung vorgesehen werden, die Einzelfasern werden in den mittleren Raum geführt.

Von Vorteil ist selbstverständlich die Anordnung mehrerer Kabeleingänge und wenigstens zwei Durchgänge in den mittleren Raum, um ankommende Kabel aus jeder Richtung unter Einhaltung der Parameter in der Wanddose aufnehmen und zu einem solchen Durchgang führen zu können, der ohne Einschränkungen erreichbar ist.

Dabei weist der Kabelführungseinsatz vorzugsweise zwei zylinderförmige Aufnahmeteile auf, die so ausgebildet sind, daß sie im unteren Raum zur Führung und Halterung des Kabels und im mittleren Raum zur Führung der Einzelfasern dienen. Wenigstens in einem der Aufnahmeteile ist eine Anordnung zur Aufnahme der Steckverbinder verdrehgesichert befestigt.

Diese vorzugsweise Anordnung ermöglicht das Verlegen der Einzelfasern mit Richtungswechsel, da die Fasern in Form einer Acht um beide Aufnahmeteile geführt werden können. Somit ist es auf einfache Art und Weise möglich, jeden Steckverbinder so zu erreichen, daß das Anschließen der Fasern ohne Unterschreitung des Mindestbiegeradius ausführbar ist.

Dabei dienen die Aufnahmeteile nicht nur der Kabel- und Fasernführung, sondern auch der Aufnahme und Befestigung der Anordnung für die Aufnahme der Steckverbinder. Dies kann wahlweise geschehen, das heißt, es kann jedes Aufnahmeteil mit einer Anordnung für die Aufnahme der Steckverbinder bestückt werden oder aber auch nur eine der beiden Aufnahmeteile. Somit kann die Anzahl der anzuschließenden Fasern den jeweiligen Gegebenheiten angepaßt werden.

Nach einer vorteilhaften Fortbildung der erfindungsgemäßen Lösung sind zur Verdrehsicherung am inneren Umfang des zylinderförmigen Aufnahmeteils Rastelemente ausgebildet, in die entsprechend ausgebildete nutförmige Aussparungen der Anordnung zur Aufnahme der Steckverbinder eingreifen.

Damit wird auf einfache Weise eine verdrehgesicherte Befestigung der Anordnung zur Aufnahme der Steckverbinder gewährleistet.

Im unteren Raum der Anschlußdose ist das Kabelzugentlastungselement angeordnet, das vorteilhaft als mehrschenklige Zugentlastungsklemme ausgebildet und vorzugsweise im Zwischenraum zwischen beiden zylinderförmigen Aufnahmeteilen verdrehgesichert befestigt ist.

Mit der Ausbildung des Zugentlastungselementes als mehrschenklige Zugentlastungsklemme können Kabel aus beliebiger Richtung zugentlastet im Kabelführungseinsatz befestigt werden.

Wenn einer der Schenkel der Zugentlastungsklemme zwischen zwei Halteelementen geführt wird, so ist auf konstruktiv einfache Weise die Zugentlastungsklemme gegen Verdrehen gesichert.

Um die Kabelmontage sicherer und handhabbarer zu gestalten, ist es insbesondere bei Einsatz von Lichtwellenleiterkabeln mit einer größeren. Anzahl Einzelfasern von Vorteil, wenn das Lichtwellenleiterkabel und/oder die Einzelfasern zusätzlich mittels Kabelbinder gehalten werden.

Erfindungsgemäß ist des weiteren vorgesehen, Kabeleingang und Durchgang zum Faseraufnahmeraum so auszubilden, daß auch Kabel mit bereits vorkonfektionierten Steckern hindurchgeführt werden können.

Damit wird die Montage wesentlich erleichtert, da bereits herstellerseitig die Fasern mit den entsprechenden Anschlußelementen versehen werden und nicht vor Ort die gegenüber der Herstellung elektrischer Anschlüsse wesentlich kompliziertere Anschlußtechnik ausgeführt werden muß.

Nach einer anderen erfindungsgemäßen Ausführungsform erfolgt im Faseraufnahmeraum die Faserführung, -halterung und Faseraufwicklung unter Bildung der notwendigen Reservelänge dadurch, daß der innere Umfang des Kabelführungseinsatzes und der äußere Umfang der zylinderförmigen Aufnahmeteile Halteelemente aufweisen, so daß zwischen der Trennplatte zwischen unterem und mittlerem Raum, den Halteelementen und den zylinderförmigen Aufnahmeteilen ein Wickelraum für die Faserwicklung entsteht und die Halteelemente den mittleren Raum begrenzen.

Damit ist ein Wickel- und Führungsraum vorgegeben, in dem die schwer handhabbaren Einzelfasern geführt und gehalten werden können, ohne daß sich diese ständig aus ihrer vorgegebenen Position lösen. Das Aufwickeln der Faserreserve kann so problemlos durchgeführt werden. Die Größe des Wickelraumes und die Anordnung der Halteelemente gewährleisten die Einhaltung des Mindestbiegradius und gestatten einen beliebigen Richtungswechsel bei Führung zur jeweiligen Anschlußposition.

Durch die Trennung des Kabelführungseinsatzes in unterschiedliche Räume wird es möglich, im mittleren Raum vorzugsweise im Zwischenraum zwischen beiden zylinderförmigen Aufnahmeteilen Spleißablagen anzuordnen. Die Spleißablagen behindern den Wickelvorgang nicht, da sie, bei Nichtbenutzung zusätzlich auch als Führung für die Einzelfasern verwendet werden können.

Dabei sind vorzugsweise zwei sich gegenüberliegende Spleißablagen zur Aufnahme von maximal je vier Spleißen vorgesehen. Die maximale Anzahl von acht zu verbindenden Lichtleiter hat sich in der Praxis als ausreichend erwiesen, da in der Regel weniger als acht Anschlüsse, die von einer Dose ausgehen, notwendig sind.

Nach einer weiteren vorteilhaften Ausbildung besteht die Anordnung zur Aufnahme der Steckverbinder aus einem zylinderförmigen Kupplungseinsatz, einer mit Befestigungselementen ausgestatteten Kupplungsplatte und einer Abdeckkappe, die so dimensioniert und ausgebildet ist, daß die Anordnung sowohl in das zylinderförmige Aufnahmeteil einsetz- als auch ein handelsüblicher Abdeckrahmen auf die Anschlußdosenanordnung aufsetzbar ist.

Mit dieser Ausbildung der Anordnung zur Aufnahme der Steckverbinder wird sichergestellt, daß weitere, handelsübliche und in der Elektroinstallation gängige Abdeckelemente einsetzbar sind, so daß lediglich die Abdeckkappe an das jeweilige verwendete System angepaßt werden muß.

Durch die mehrteilige Gestaltung der Anordnung wird erreicht, daß auch in diesem Bereich die Anschlüsse optimal ausgeführt werden können und die Steckverbinder mit möglichst geringem Abstand zur Wand in den freien Raum ragen.

Dabei ist der zylinderförmige Kupplungseinsatz aus einem in das Aufnahmeteil ragenden Befestigungsteil und einem zumindest teilweise über dem Kabelführungseinsatz überstehenden Kupplungsteil gebildet.

Der Befestigungsteil muß in seinen Abmessungen an die Größe der zylinderförmigen Aufnahmeteile angepaßt sein, der diese Teile überragende Abschnitt ist an die vorgegebenen Normdurchbrüche der Abdeckrahmen angepaßt. Damit wird gewährleistet, daß die optische Anschlußdosenanordnung in unterschiedlichste Installationssysteme integrierbar ist.

Des weiteren ist der Befestigungsteil vorzugsweise mit vier nutförmigen Aussparungen zum wahlweise jeweils um 90° versetzt und verdrehsicheren Einsetzen in das Aufnahmeteil versehen.

Dadurch wird erreicht, daß die optische Anschlußdosenanordnung wahlweise sowohl vertikal als auch horizontal in jeweils zwei Positionen einsetzbar ist. Das erhöht die Variabilität der Lichtleiteranschlüsse.

Um die Anordnung zur Aufnahne der Steckverbinder auf möglichst einfache Art und Weise im Kabelführungseinsatz befestigen zu können, ist erfindungsgemäß vorgesehen, im Inneren des zylinderförmigen Befestigungsteils eine Aufnahme für ein Befestigungselement anzuordnen, die speichenartig mit dem Befestigungsteil verbunden ist.

Dabei ist vorzugsweise jeweils ein speichenartiges Befestigungselement mit einem durch die nutförmigen Aussparungen gebildeten, schenkelartigen Abschnitt verbunden, wobei die speichenartigen Befestigungselemente unter einem Winkel kleiner 90° schräg nach innen geneigt ausgeführt sind.

Damit wird ein Verspannen der Anordnung im zylinderförmigen Aufnahmeteil erreicht.

Um zu gewährleisten, daß auch im oberen Raum der optischen Anschlüßdosenanordnung die Einzelfasern durch nicht sachgemäße Handhabung beschädigt werden, ist erfindungsgemäß vorgesehen, das Kupplungsteil zur Faserführung mit Führungskanälen, deren Verlauf unter einem vorgegebenen Radius erfolgt, zu versehen.

Aus gestalterischen Gründen und um den Platzbedarf zu reduzieren sind am Kupplungsteil Befestigungselemente zur lösbaren Befestigung der Kupplungsplatte derart angeordnet und ausgebildet, daß die in die Kupplungsplatte eingesetzten Lichtwellenleitersteckverbinder unter einem Winkel kleiner 90° in der Anschlußdosenanordnung befestigt sind.

Damit wird gleichzeitig erreicht, daß die von den anzuschließenden Geräten zur Anschlußdose führenden Leitungen so angeschlossen werden können, daß auch hier der vorgegebene Mindestbiegeradius eingehalten wird und daß es nicht zum Abknikken der Leitungsenden kommen kann.

Von Vorteil ist auch, wenn mit der Kupplungsplatte Befestigungsstege verbunden sind, die Rastelemente aufweisen, die in entsprechend ausgebildete Gegenelemente des Kupplungsteils eingreifen, wobei die Anordnung der Gegenelemente die abgewinkelte Stellung der Steckverbinder vorgeben.

Diese konstruktive Ausführungsform der Kupplungsplatte sichert ein schnelles und unkompliziertes Befestigen und Lösen der Steckverbinder mit beziehungsweise von der Anschlußdose, beispielsweise bei Montage oder Reparatur.

Ein weiterer Vorteil ist dadurch gegeben, daß die Kupplungsplatte Durchgänge aufweist, die an die jeweils einzusetzenden Steckverbinder sowohl in Form und Größe als auch Anzahl angepaßt sind.

Das heißt, daß auch ein schneller Austausch der gesamten Kupplungsplatte möglich ist, falls diese Anschlußdose für eine größere oder geringere Anzahl Anschlüsse verwendet werden soll, oder aber, wenn andere Ausführungsformen von Steckverbindern eingesetzt werden sollen.

Der ästhetischen Formgestaltung Rechnung tragend weist die Abdeckkappe eine an die abgewinkelt eingesetzten Steckverbinder angepaßte, dachartige Form auf.

Wenn die Abdeckkappe eine Aufnahme für ein Befestigungselement aufweist, die so angeordnet und ausgebildet ist, daß das Befestigungselement die gesamte Anordnung zur Aufnahme der Steckverbinder im Kabelführungseinsatz und den handelsüblichen Abdeckrahmen auf diesem befestigt, so wird erreicht, daß mittels eines Befestigungselementes die gesamte Anordnung zur Aufnahme der Steckverbinder und auch der Abdeckrahmen zuzüglich weiterer Zwischenringe u.ä. befestigt werden kann.

Nach einer besonders vorteilhaften Ausgestaltung sind dazu sowohl die Aufnahme für das Befestigungselement des Kupplungseinsatzes als auch die der Abdeckkappe als Durchgang zur Durchführung einer Schraube ausgebildet.

Mit dem Festdrehen der Schraube wird erreicht, daß die speichenartigen Befestigungselemente zumindest teilweise in eine waagerechte Lage gedrückt und die damit verbundenen schenkelartigen Abschnitte des Befestigungsteils im zylinderförmigen Aufnahmeteil verspannt werden. Diese einfache und kostengünstige Lösung für die Befestigung aller zur Anordnung für die Aufnahme der Steckverbinder gehörenden Teile ermöglicht auch eine schnelle und leicht durchzuführende Montage. Außerdem wird erreicht, daß die Anordnung in jeder beliebigen Höhe beziehungsweise Tiefe im Aufnahmeteil befestigt werden kann. Höhendifferenzen infolge unterschiedlich ausgebildeter Abdeckrahmen sind dadurch problemlos ausgleichbar.

Wenn die Abdeckkappe im Bereich der Aufnahme für das Befestigungselement mit einer nutförmigen Aussparung zur Ausbildung als Beschriftungsfeld versehen ist, kann so die Befestigungsschraube verdeckt werden, was sich wiederum positiv auf das äußere Ansehen der optischen Anschlußdosenanordnung auswirkt.

Um den stabilen und sicheren Anschluß der Steckverbinder zu gewährleisten ist als zusätzliche Halterung vorgesehen, in der Abdeckkappe Halteelemente zur Fixierung der Kupplungsplatte anzuordnen. Diese können ebenfalls als übliche Rastelemente ausgebildet sein.

Wenn der obere Raum dadurch von den übrigen Räumen abgetrennt ist, daß er gebildet wird aus dem Zwischenraum zwischen den Halteelementen des mittleren Raumes und der Auflagefläche des Abdeckrahmens auf dem Kabelführungseinsatz, so ist eine klare Zuordnung der einzelnen Fasern zu den jeweiligen Steckverbindern auf übersichtliche Art und Weise möglich, was sich insbesondere vorteilhaft bei Verwendung einer relativ großen Anzahl anzuschließender Fasern in einer Doppeldose auswirkt.

Die gesonderte Ausbildung eines Anschlußraumes ermöglicht auch ein relativ einfaches Herstellen der Verbindung, da alle Steckverbinderanschlüsse frei zugänglich sind. Die Faserreserve wird im mittleren Raum gehaltert, so daß es nicht zu Positionsänderungen der Fasern kommen kann, jede Faser wird unter Einhaltung des Biegeradius bis zum jeweiligen Steckverbinder geführt und erst nach Ausführung der Kupplungen wird die Kupplungsplatte in der Anordnung befestigt.

Die Erfindung soll nachfolgend anhand eines Ausführungsbeispieles näher erläutert werden. Die dazugehörige Zeichnung zeigt dabei in
- Fig. 1: die Sicht auf den unteren Raum, den Kabelaufnahmeraum der optischen Anschlußdosenanordnung als prinzipielle Darstellung,
- Fig. 2: die Sicht auf den mittleren Raum, den Faseraufnahmeraum als prinzipielle Darstellung,
- Fig. 3: die Draufsicht auf die Anordnung zur Aufnahme der Steckverbinder im nichtmontierten Zustand und ohne Abdeckkappe,
- Fig. 4: die Seitenansicht nach Fig. 3,
- Fig. 5: die Seitenansicht der Abdeckkappe nach Fig. 4 und
- Fig. 6: die optische Anschlußdosenanordnung im montierten Zustand.

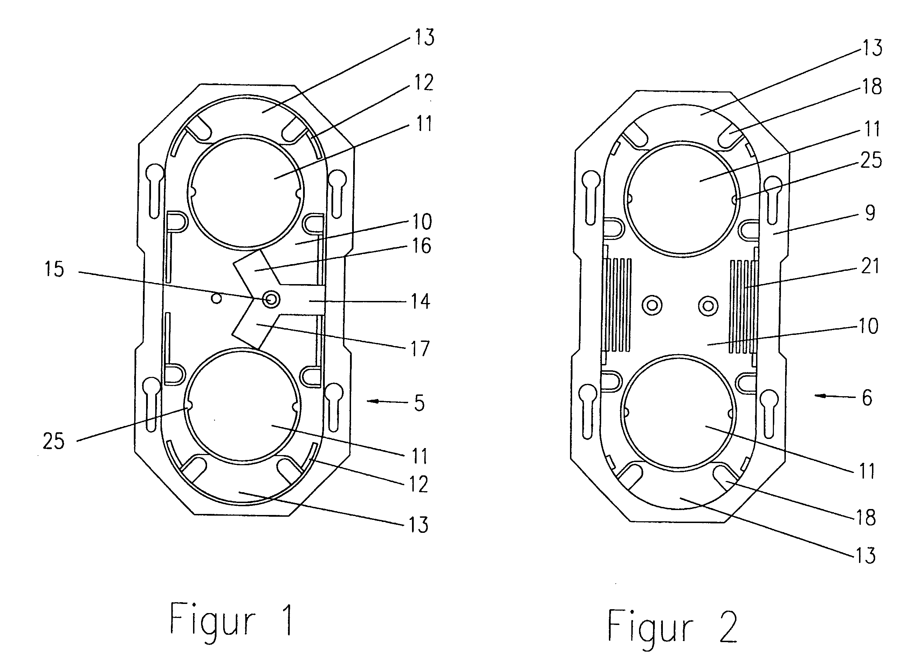

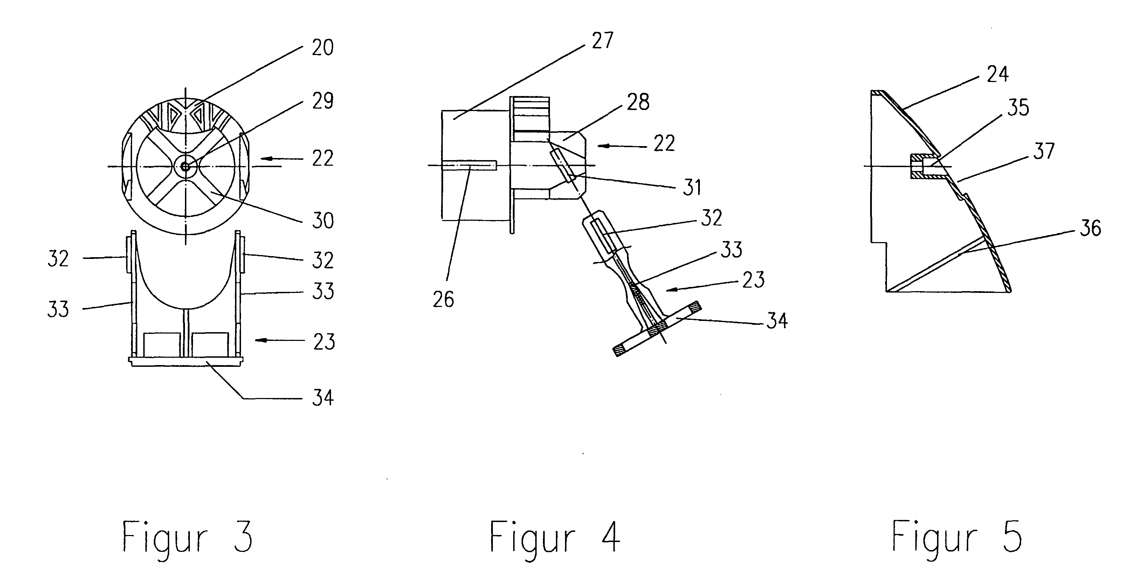

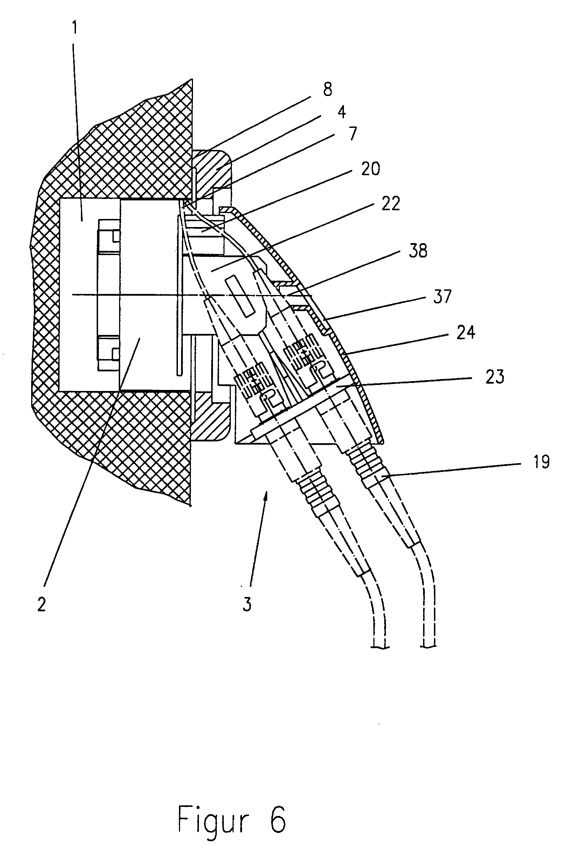

Nach den Fig. 1 bis 6 besteht eine optische Anschlußdosenanordnung aus einer in der Elektroindustrie handelsüblichen Doppeldose 1, in der der Kabelführungseinsatz 2 eingesetzt ist, in dem die in den Fig. 3 bis 5 dargestellte Anordnung 3 zur Aufnahme der Steckverbinder befestigt ist. Die Doppeldose 1 kann dabei sowohl als Unterputz-, Aufputz- oder als Kanaleinbaudose ausgebildet sein. Außerdem weist die optische Anschlußdosenanordnung einen handelsüblichen, an das System der Doppeldose 1 angepaßten Abdeckrahmen 4 auf, der mit weiteren, in der Zeichnung nicht dargestellten Zwischenabdeckringen versehen sein kann.

Die optische Anschlußdosenanordnung ist im wesentlichen in drei Räume unterteilt, einen unteren oder Kabelaufnahmeraum 5, einen mittleren oder Faseraufnahmeraum 6 und einen oberen oder Anschlußraum 7. Der untere und der mittlere Raum 5 und 6 sind im Kabelführungseinsatz 2 angeordnet, während der Anschlußraum 7 zwischen oberem Ende des Kabelführungseinsatzes 2 und der Auflagefläche 8 ausgebildet ist.

Der Kabelführungseinsatz 2 besteht dabei im wesentlichen aus einem Befestigungsrahmen 9, der mit einer Trennplatte 10 verbunden ist, die zwei hindurchführende, gleichgestaltete, zylinderförmige Aufnahmeteile 11 aufweist und den Kabelführungseinsatz 2 in den unteren und mittleren Raum 5 und 6 teilt. Der Kabelführungseinsatz 2 ist dabei so dimensioniert, daß zwischen unterem Raum 5 und Doppeldosenwand ein genügend großer Hohlraum vorhanden ist, um das ankommende Lichtwellenleiterkabel (in der Zeichnung nicht dargestellt) gut händeln zu können. Das heißt, daß der Kabelführungseinsatz 2 eine gegenüber der Doppeldose 1 wesentlich geringere Höhe aufweist.

Der untere Raum 5 ist mit vier Kabeleingängen (in der Zeichnung nicht dargestellt) ausgestattet, die über den Umfang symetrisch verteilt angeordnet sind und eine solche Größe aufweisen, daß sowohl Bündeladerkabel als auch bereits vorkonfektionierte Lichtwellenleiterkabel, sogenannte Break-Out-Kabel in die Anschlußdosenanordnung geführt werden können.

Des weiteren ist der untere Raum 5 mit abstandsweise angeordneten stegartigen Halteelementen 12 ausgestattet, die der Führung und Halterung des Lichtwellenleiterkabels dienen. Die stegartigen Halteelemente 12 drücken das Kabel gegen die Trennplatte 10 und führen es zwischen Aufnahmeteil 11 und Befestigungsrahmen 9 unter Einhaltung des Biegeradius zu einem günstig gelegenen Durchgang 13 zur Durchführung des Kabels in den mittleren Raum 6. Die Durchgänge 13 sind als nutförmige Aussparungen ausgebildet und jeweils an den Stirnseiten zwischen Trennplatte 10 und Befestigungsrahmen 9 angeordnet. Durch die exzentrische jedoch symetrische Anordnung der Aufnahmeteile 11 im Kabelführungseinsatz 2 wird gewährleistet, daß das Kabel, unabhängig davon, welcher Kabeleingang genutzt wird, immer vorgabegerecht zu einem Durchgang geführt werden kann. Das Freilegen der Einzelfasern geschieht entweder bereits im unteren Raum 5 oder aber ab Durchgang 13 in den mittleren Raum 6.

Die zylinderförmigen Aufnahmeteile 11 sind dabei so angeordnet, daß zwischen Befestigungsrahmen 9 und Aufnahmeteil 11 das Lichtwellenleiterkabel frei geführt werden kann.

Zur Kabelzugentlastung ist zwischen beiden Aufnahmeteilen 11 eine dreischenklige Zugentlastungsklemme 14 angeordnet, die mittels einer einfachen Schraubverbindung 15 das Kabel klemmt. Der eine Schenkel 16 sichert durch seine Anordnung zwischen zwei stegartigen Halteelementen 12 die Zugentlastungsklemme 14 gegen Verdrehen, während die beiden anderen Schenkel 17 schräg in Richtung Aufnahmeteile 11 ragen und so jedes, aus beliebiger Richtung ankommende Kabel klemmen können. Es ist außerdem vorgesehen, die Zugentlastungsklemme 14 entweder in der linken oder rechten Hälfte des Kabelführungseinsatzes 2 zwischen den Aufnahmeteilen 11 zu befestigen, um jeden Kabeleingang nutzbar zu halten.

Der mittlere Raum 6 ist in Fig. 2 dargestellt. Sie weist neben den Aufnahmeteilen 11 auf den Umfang verteilt angeordnete, nasenförmige Halteelemente 18 auf, die innerhalb des Befestigungsrahmens 9 angeordnet sind. Das heißt, zwischen der Oberseite der Halteelemente 18 und der oberen Abschlußfläche des Kabelführungseinsatzes 2 ist noch ein gewisser Zwischenraum vorhanden, der den oberen Raum 7 bildet. Die einzelnen Fasern werden zwischen Trennplatte 10 und Halteelementen 18 entweder entlang des Befestigungsrahmens 9 oder aber in Form einer Acht um beide Aufnahmeteile 11 geführt, bis eine genügend lange Faserreserve gebildet ist. Das Aufwickeln erfolgt problemlos, da genügend Raum vorhanden ist, um dies auch unter dem vorgegebenen Biegradius zu tun. Die Faserenden werden zum Verbinden mit den Steckverbindern 19 in den oberen Raum 7, das heißt über die nasenartigen Halteelemente 18 geführt und gelangen von dort zunächst in jeweils einen Führungskanal 20, der an der Anordnung 3 zur Aufnahme der Steckverbinder 19 ausgebildet ist .

Im Zwischenraum zwischen den Aufnahmeteilen 11 sind an beiden Längsseiten des Kupplungseinsatzes 2 Spleißablagen 21 angeordnet, die je vier Spleiße aufnehmen können. Zusätzlich können die Spleißablagen 21 auch der Führung der Fasern dienen.

Die Anordnung 3 zur Aufnahme der Steckverbinder besteht gemäß den Figuren 3 bis 6 aus dem zylinderförmigen Kupplungseinsatz 22, der Kupplungsplatte 23 und der dachartigen Abdeckkappe 24. Die Anordnung 3 zur Aufnahme der Steckverbinder 19 wird in dem oder den Aufnahmeteilen 11 verdrehsicher befestigt. Die Verdrehsicherung geschieht dadurch, daß in den Aufnahmeteilen 11 Rastelemente 25 in Form einfacher Rastnasen angeordnet sind, die mit nutförmigen Aussparungen 26 in Form einfacher Schlitze, die in dem Teil des Kupplungseinsatzes 22 angeordnet sind, der im Aufnahmeteil 11 sitzt und mit Befestigungsteil 27 bezeichnet wird, korrespondieren. Diese Anordnung hat neben der Verdrehsicherung noch eine weitere Funktion. Die Steckverbinder 19 können, wenn das Befestigungsteil 27 vierfach symetrisch geschlitzt ausgebildet ist, in vier verschiedenen Stellungen, zwei in waagerechter und zwei in vertikaler Richtung, also jeweils um 90° versetzt angeordnet werden. Damit kann speziellen Anschlußpositionen der Steckverbinder 19 Rechnung getragen werden.

Der zylinderförmige Kupplungseinsatz 22 ist geteilt ausgebildet und besteht aus dem Befestigungsteil 27 und dem Kupplungsteil 28. Das Befestigungsteil 27 ist dabei in seinem äußeren Umfang dem inneren Umfang des Aufnahmeteils 11 angepaßt, während das Kupplungsteil 28 zumindest im Bereich des Abdeckrahmens 4 an die Abmessungen des Normdurchbruches des Abdeckrahmen 4 angepaßt sein muß, da dieses aus der Anschlußdosenanordnung herausragt.

Wie in Fig. 3 dargestellt, ist im Inneren des Kupplungsteils 28 eine mittige Durchführung 29, die der Durchführung einer Schraube dient, angeordnet. Die Durchführung 29 wird von speichenartig angeordneten Befestigungselementen 30 gehalten. Die speichenartigen Befestigungselemente 30 sind jeweils mit einem der durch die Schlitze 26 gebildeten Abschnitte des Befestigungsteils 27 verbunden und zwar so, daß sie im Ausgangszustand schräg nach innen geneigt ausgeführt sind. Die genaue Ausführung der Befestigung wird im folgenden noch näher erläutert.

Das Kupplungsteil 28 ist so mit Führungskanälen 20 versehen, daß auch in diesem Anschlußraum gewährleistet wird, daß der vorgeschriebene Biegeradius eingehalten wird. Dabei sind die Führungskanäle 20, wie in Fig. 3 dargestellt, so ausgebildet, daß die Fasern in vorbestimmte Bahnen gelegt werden, um Beschädigungen beim Anschließen zu vermeiden. Die Bahnführungen sind dabei jeweils auf den anzuschließenden Steckverbinder 19 gerichtet.

Am oberen Ende des Kupplungsteils 28 sind Rastelemente 31 in Form einfacher Raststege oder Rastnuten angeordnet, die mit entsprechend ausgebildeten Gegenelementen 32 der Kupplungsplatte 23 korrespondieren und diese am Kupplungsteil 28 lösbar befestigen. Wichtig ist, daß diese Rastelemente 31 unter'einem vorgegebenen Winkel kleiner 90°, vorzugsweise 30° angeordnet sind, so daß die Steckverbinder 19 zur Wand geneigt eingesetzt werden können. Damit wird gewährleistet, daß auch die von den Geräten wegführenden Kabel knickfrei angeschlossen werden und Beschädigungen verhindert werden können.

Die Kupplungsplatte 23 weist zwei Befestigungsstege 33 auf, die den Kupplungsteil 28 umfassen und an dem die Gegenelemente 32 angeordnet sind, die in die Rastelemente 31 des Kupplungsteils 28 eingreifen. Die Kupplungsplatte 23 ist mit Steckverbinderaufnahmen 34 versehen und so ausgebildet, daß maximal vier Steckverbinder 19 neben- und/oder übereinander anordenbar sind. Das Lochmuster der Kupplungsplatte 23 kann dabei variabel gestaltet und an den jeweiligen konkreten Einsatzzweck angepaßt werden, d.h. es können sowohl weniger als vier Steckverbinderaufnahmen 34 als auch Aufnahmen 34 gleich oder unterschiedlicher Größe und Anordnung vorgesehen werden. Die Austauschbarkeit der Kupplungsplatten 23 ist durch die lösbare Befestigung der Kupplungsplatte 23 im Kupplungsteil 28 gewährleistet.

Die dachartige Abdeckkappe 24 ist in ihrer äußeren Form der geneigten Anordnung der Steckverbinder 19 angepaßt und sitzt im montierten Zustand auf dem Durchbruch des Abdeckrahmen 4 auf. Im Bereich der Durchführung 29 des Kupplungseinsatzes 22 weist die Abdeckkappe 24 eine gleichgeformte Durchführung 35, in Form einer Bohrung auf. Durch diese Ausführung wird erreicht, daß mittels einer Schraube 38 die gesamte Anordnung 3 zur Aufnahme der Steckverbinder 19 in einem Arbeitsgang befestigt wird. Die Schraube 38 wird so lange verdreht, bis die speichenartigen Befestigungselemente 30 im Inneren des Kupplungseinsatzes 22 aus ihrer schrägen Lage in nahezu waagerechte Lage gedrückt werden. Dadurch werden die einzelnen Abschnitte des Befestigungsteils 27 gegen die Innenwand des Aufnahmeteils 11 gedrückt und die Abdeckkappe 24, mit dazwischenliegendem Abdeckrahmen 4 und verrasteter Kupplungsplatte 23 verspannt. Das Verspannen kann in jeder beliebigen Position des Befestigungsteils 27 im Aufnahmeteil 11 erfolgen, so daß dadurch ein selbstjustierender Höhenausgleich erreicht wird, der durch die unterschiedlichen Ausführungsformen der Abdeckrahmen 4 und deren jeweiliger Einbauhöhe erforderlich ist.

In der Abdeckkappe 24 ist des weiteren eine umlaufende nutförmige Aussparung 36 ausgebildet, in der die Kupplungsplatte 23 gehaltert wird.

Im Bereich der Durchführung 35 für die Befestigungsschraube 38 ist auf der Oberseite der Abdeckkappe 24 ebenfalls eine nutförmige Aussparung 37 vorgesehen, die als Beschriftungsfeld ausgebildet ist und somit gleichzeitig die Schraube 38 im montierten Zustand abdeckt.

Die Montage der Anschlußdosenanordnung geschieht auf folgende Weise:

Nach dem Einführen des Lichtwellenleiterkabels in den unteren Raum 5 des Kabelführungseinsatzes 2, dessen Festlegung und Durchführung in den mittleren Raum 6, erfolgt das Aufwickeln des Faservorrates und das Führen der Fasern in den oberen Raum 7 und zum jeweiligen Führungskanal 20 im Kupplungseinsatz 22, der bereits im Aufnahmeteil 11 angeordnet ist. Bei Verwendung von Kabeln mit bereits vorkonfektionierten Steckern werden deren Stecker 19 lediglich in die Steckverbinderaufnahmen 34 der Kupplungsplatte 23 eingesetzt, die Kupplungsplatte 23 wird im Kupplungsteil 28 verrastet. Danach erfolgt die Montage des Abdeckrahmens 4 und der Abdeckkappe 24. Zuletzt erfolgt das Verschrauben der Anordnung und das Abdecken des Schraubloches in der Abdeckkappe 4. Danach kann die Verbindung mit den Endgeräten hergestellt werden.

### Optische Anschlußdosenanordnung

### Bezugszeichenliste

- 1: Doppeldose
- 2: Kabelführungseinsatz
- 3: Anordnung zur Aufnahme der Steckverbinder
- 4: Abdeckrahmen
- 5: unterer oder Kabelaufnahmeraum
- 6: mittlerer oder Faseraufnahmeraum
- 7: oberer oder Anschlußraum
- 8: Auflagefläche des Abdeckrahmens
- 9: Befestigungsrahmen
- 10: Trennplatte
- 11: Aufnahmeteil
- 12: stegartiges Halteelement
- 13: Durchgang
- 14: Kabelzugentlastungselement
- 15: Schraubverbindung
- 16: Schenkel der Zugentlastung
- 17: Schenkel der Zugentlastung
- 18: nasenförmiges Halteelement
- 19: Steckverbinder
- 20: Führungskanal
- 21: Spleißablage
- 22: Kupplungseinsatz
- 23: Kupplungsplatte
- 24: Abdeckkappe
- 25: Rastelement
- 26: nutförmige Aussparung
- 27: Befestigungsteil
- 28: Kupplungsteil
- 29: Durchführung
- 30: speichenartiges Befestigungselement
- 31: Rastelement
- 32: Gegenelement
- 33: Befestigungssteg
- 34: Steckverbinderaufnahme
- 35: Durchführung in der Abdeckkappe
- 36: nutförmige Aussparung
- 37: nutförmige Aussparung
- 38: Schraube

## Patentansprüche

1. Optische Anschlußdosenanordnung zum vorzugsweisen Einbau in handelsübliche, für den Anschluß von elektrischen Leitungen vorgesehene Aufputz-, Unterputz- und Kanaldosen sowie in Gerätebecher, im wesentlichen bestehend aus einer Wanddose, einem Kabelführungseinsatz mit daran angeordneten Befestigungselementen, einem Abdeckrahmen und einer Anordnung zur Aufnahme der Lichtwellenleitersteckverbinder, **dadurch gekennzeichnet, daß** die Wanddose als Doppeldose (1) ausgebildet ist, in der der an Form und Größe der Doppeldose (1) angepaßte Kabelführungseinsatz (2) eingesetzt ist, der zusammen mit mindestens einer Anordnung (3) zur Aufnahme von mindestens einem Steckverbinder (19) die Anschlußdose in drei Aufnahmeräume (5, 6, 7) trennt, einen unteren Kabelaufnahmeraum (5) und einen mittleren Faseraufnahmeraum (6), die beide durch eine Trennplatte (10) des Kabelführungseinsatzes (2) gebildet werden, sowie einen oberen Anschlußraum (7), der zwischen der Anordnung (3) zur Aufnahme wenigstens eines Lichtwellenleitersteckverbinders (19) und dem Kabelführungseinsatz (2) gebildet wird,
daß der Kabelaufnahmeraum (5) Zugentlastungsmittel (14) und Halteelemente (12) zur zugentlastenden Führung des Lichtwellenleiterkabels aufweist,
daß der Faseraufnahmeraum (6) mit Mitteln (9, 11, 18) zur Aufnahme und Führung der Einzelfasern unter Bildung einer Kabelreserve ausgestattet ist,
daß der Anschlußraum (7) Mittel (20, 22) zur Führung der Einzelfasern zum und zur Verbindung mit dem oder den jeweiligen Lichtwellenleitersteckverbindern (19) aufweist,
daß die Räume (5, 6, 7) so ausgebildet sind, daß Kabel und Einzelfasern unter Einhaltung des vorgegebenen Mindestbiegeradius geführt werden und
daß die Anordnung (3) zur Aufnahme des oder der Steckverbinder (19) auf dem Kabelführungseinsatz (2) axial verschieb- und verdrehbar befestigt ist.

2. Anschlußdosenanordnung nach Anspruch 1, **dadurch gekennzeichnet, daß** der Kabelführungseinsatz (2) in seinem unteren Raum (5) jeweils mindestens einen Kabeleingang, einen Durchgang (13) zum Durchführen des Kabels oder der Einzelfasern in den mittleren Raum (6), ein am inneren Umfang angeordnetes Halteelement (12) zur Führung und Halterung des Lichtwellenleiterkabels und ein exzentrisch angeordnetes, zylinderförmiges Aufnahmeteil (11) aufweist, das so in der Trennplatte (10) zwischen unterem und mittlerem Raum (5, 6) angeordnet ist, daß das zylinderförmige Aufnahmeteil (11) auch den mittleren Raum (6) durchragt.

3. Anschlußdosenanordnung nach Anspruch 1 und 2, **dadurch gekennzeichnet, daß** der Kabelführungseinsatz (2) vorzugsweise zwei zylinderförmige Aufnahmeteile (11) aufweist, die so ausgebildet sind, daß sie im unteren Raum (5) zur Führung und Halterung des Kabels dienen, im mittleren Raum (6) zur Führung der Einzelfasern und daß wenigstens in einem der Aufnahmeteile (11) eine Anordnung (3) zur Aufnahme der Steckverbinder (19) verdrehgesichert befestigt ist.

4. Anschlußdosenanordnung nach Anspruch 3, **dadurch gekennzeichnet, daß** zur Verdrehsicherung am inneren Umfang des zylinderförmigen Aufnahmeteils Rastelemente (25) ausgebildet sind, in die entsprechend ausgebildete nutförmige Aussparungen (26) in der Anordnung (3) zur Aufnahme der Steckverbinder (19) eingreifen.

5. Anschlußdosenanordnung nach Anspruch 1 bis 4, **dadurch gekennzeichnet, daß** im unteren Raum (5) der Anschlußdose das Kabelzugentlastungselement (14) angeordnet ist, das vorzugsweise als mehrschenklige Zugentlastungsklemme ausgebildet und im Zwischenraum zwischen beiden zylinderförmigen Aufnahmeteilen (11) verdrehgesichert befestigt ist.

6. Anschlußdosenanordnung nach Anspruch 5, **dadurch gekennzeichnet, daß** ein Schenkel (16) der Zugentlastungsklemme (14) zwischen zwei Halteelementen (12) verdrehsicher geführt wird.

7. Anschlußdosenanordnung nach Anspruch 1 bis 6, **dadurch gekennzeichnet, daß** das Lichtwellenleiterkabel und/oder die Einzelfasern zusätzlich mittels Kabelbinder gehalten werden.

8. Anschlußdosenanordnung nach Anspruch 1 bis 7, **dadurch gekennzeichnet, daß** Kabeleingang und Durchgang (13) des Kabelaufnahmeraumes (5) so ausgebildet sind, daß auch Kabel mit bereits vorkonfektionierten Steckern hindurchgeführt werden können.

9. Anschlußdosenanordnung nach Anspruch 1 bis 8, **dadurch gekennzeichnet, daß** im Faserführungsraum (6) die Faserführung, -halterung und -aufwicklung unter Bildung von Faserreservelängen dadurch geschieht, daß der innere Umfang des Kabelführungseinsatzes (2) und der äußere Umfang der zylinderförmigen Aufnahmeteile (11) Halteelemente (18) aufweisen, so daß zwischen der Trennplatte (10) zwischen unterem und mittlerem Raum (5, 6), den Halteelementen (18) und den zylinderförmigen Aufnahmeteilen (11) ein Wickelraum für die Faserwicklung entsteht und daß die Halteelemente (18) den mittleren Raum (6) begrenzen.

10. Anschlußdosenanordnung nach Anspruch 1 bis 9, **dadurch gekennzeichnet, daß** im mittleren Raum (6) vorzugsweise im Zwischenraum zwischen beiden zylinderförmigen Aufnahmeteilen (11) Spleißablagen (21) angeordnet sind.

11. Anschlußdosenanordnung nach Anspruch 10, **dadurch gekennzeichnet, daß** vorzugsweise zwei sich gegenüberliegende Spleißablagen (21) zur Aufnahme von maximal je vier Spleißen vorgesehen sind.

12. Anschlußdosenanordnung nach Anspruch 1 bis 11, **dadurch gekennzeichnet, daß** die Anordnung (3) zur Aufnahme der Steckverbinder (19) aus einem zylinderförmigen Kupplungseinsatz (22), einer mit Befestigungselementen (33) ausgestatteten Kupplungsplatte (23) und einer Abdeckkappe (24) besteht, die so dimensioniert und ausgebildet sind, daß die Anordnung (3) sowohl in ein zylinderförmige Aufnahmeteil (11) einsetz- als auch ein handelsüblicher Abdeckrahmen (4) auf die Anschlußdosenanordnung aufsetzbar ist.

13. Anschlußdosenanordnung nach Anspruch 12, **dadurch gekennzeichnet, daß** der zylinderförmige Kupplungseinsatz (22) aus einem in das Aufnahmeteil (11) ragenden Befestigungsteil (27) und einem zumindest teilweise über den Kabelführungseinsatz (2) überstehenden Kupplungsteil (28) besteht.

14. Anschlußdosenanordnung nach Anspruch 12 und 13, **dadurch gekennzeichnet, daß** der Befestigungsteil (27) vorzugsweise mit vier nutförmigen Aussparungen (26) zum wahlweise jeweils um 90° versetzt und verdrehsicheren Einsetzen in das Aufnahmeteil (11) versehen ist.

15. Anschlußdosenanordnung nach Anspruch 12 bis 14, **dadurch gekennzeichnet, daß** im Inneren des zylinderförmigen Befestigungsteils (27) eine Aufnahme (29) für ein Befestigungselement (38) angeordnet ist, die speichenartig mit dem Befestigungsteil (27) verbunden ist.

16. Anschlußdosenanordnung nach Anspruch 15, **dadurch gekennzeichnet, daß** vorzugsweise jeweils ein speichenartiges Befestigungselement (30) mit einem durch die nutförmigen Aussparungen (26) gebildeten, schenkelartigen Abschnitt des Befestigungsteils (27) verbunden ist, wobei die speichenartigen Befestigungselemente (30) unter einem Winkel kleiner 90° schräg nach innen geneigt ausgeführt sind.

17. Anschlußdosenanordnung nach Anspruch 12 bis 16, **dadurch gekennzeichnet, daß** das Kupplungsteil (28) zur Faserführung mit Führungskanälen (20), deren Verlauf unter einem vorgegebenen Radius erfolgt, versehen ist.

18. Anschlußdosenanordnung nach Anspruch 12 bis 17, **dadurch gekennzeichnet, daß** am Kupplungsteil (28) Befestigungselemente (31) zur lösbaren Befestigung der Kupplungsplatte (23) derart angeordnet und ausgebildet sind, daß die in die Kupplungsplatte (23) eingesetzten Lichtwellenleitersteckverbinder (19) unter einem Winkel kleiner 90° in der Anschlußdosenanordnung befestigt sind.

19. Anschlußdosenanordnung nach Anspruch 18, **dadurch gekennzeichnet, daß** mit der Kupplungsplatte (23) Befestigungsstege (33) verbunden sind, die Rastelemente (32) aufweisen, die in entsprechend ausgebildete Gegenelemente (31) des Kupplungsteils (28) eingreifen, wobei die Anordnung der Gegenelemente (31) die abgewinkelte Stellung der Steckverbinder (19) vorgeben.

20. Anschlußdosenanordnung nach Anspruch 12 bis 19, **dadurch gekennzeichnet, daß** die Kupplungsplatte (23) Durchgänge (34) aufweist, die an die jeweils einzusetzenden Steckverbinder (19) sowohl in Form und Größe als auch Anzahl angepaßt sind.

21. Anschlußdosenanordnung nach Anspruch 12 bis 20, **dadurch gekennzeichnet, daß** die Abdeckkappe (24) eine an die abgewinkelt eingesetzten Steckverbinder (19) angepaßte, dachartige Form aufweist.

22. Anschlußdosenanordnung nach Anspruch 12 bis 21, **dadurch gekennzeichnet, daß** die Abdeckkappe (24) eine Aufnahme (35) für ein Befestigungselement (38) aufweist, die so angeordnet und ausgebildet ist, daß das Befestigungselement (38) die gesamte Anordnung (3) zur Aufnahme der Steckverbinder (19) im Kabelführungseinsatz (2) und den Abdeckrahmen (4) auf diesem befestigt.

23. Anschlußdosenanordnung nach Anspruch 22, **dadurch gekennzeichnet, daß** sowohl die Aufnahme (29) für das Befestigungselement (38) des Kupplungseinsatzes (22) als auch die der Abdeckkappe (24) als Durchgang zur Durchführung einer Schraube (38) ausgebildet sind.

24. Anschlußdosenanordnung nach Anspruch 12 bis 23, **dadurch gekennzeichnet, daß** die Abdeckkappe (24) im Bereich der Aufnahme (35) für das Befestigungselement (38) mit einer nutförmigen Aussparung (37) zur Ausbildung als Beschriftungsfeld versehen ist.

25. Anschlußdosenanordnung nach Anspruch 12 bis 24, **dadurch gekennzeichnet, daß** in der Abdeckkappe (24) Halteelemente (36) zur Fixierung der Kupplungsplatte (23) angeordnet sind.

26. Anschlußdosenanordnung nach Anspruch 1 bis 25, **dadurch gekennzeichnet, daß** der Anschlußraum (7) gebildet wird aus dem Zwischenraum zwischen den Halteelementen (18) des mittleren Raumes (6) und der Auflagefläche (8) des Abdeckrahmens (4) auf dem Kabelführungseinsatz (2).

## Claims

1. Optical connection socket arrangement mainly for installation in commercially available surface mounting, flush mounting and trunking mounted sockets, as well as in appliance receptacles all intended for the connection of electrical lines, consisting essentially of a wall socket, a cable entry insert with associated clamping elements, a covering frame and an arrangement for the reception of the fiber optic cable connecter, **so identified** by the implementation of the wall socket as a twin socket (1) into which the cable guide insert (2), adapted in the form and size of the twin socket, is set, which, together with at least one arrangement (3) for the acceptance of at least one plug connector (19), divides the connection socket receptacle into three entry sections (5, 6, 7), a lower cable entry space (5) and an intermediate storage space (6) for the fiber cores, both spaces being formed by a separating plate (10) of the cable guide insert (2), along with an upper connection space (7) formed by the arrangement (3) for the acceptance of at least one fiber optic connector (19) and the cable entry insert (2),
**so identified** by the cable entry section (5) containing a method for strain relief (14) and clamping elements (12) for the strain relieved entry of the fiber optic cable,
**so identified** by the provision in the section for the storage of the fiber cores (6) of the means (9, 11, 18) for the containment and guidance of the individual cores while accommodating a cable reserve,
**so identified** by the spaces (5, 6, 7) being so constructed, that cable and individual fiber cores are guided with the provision of the prescribed minimum bending radius and,
**so identified** by the securing of the arrangement for the mounting of the plug connector or connectors on the cable guide insert (2), this arrangement being axially movable and rotatable.

2. Connection socket arrangement according to Section 1, **so identified** by the cable entry section (2) containing in its lower or cable entry section (5), at least one cable entry, a throughway (13) to feed through the cable or the individual cores into the center or fiber storage section (6), a bridge shaped clamping element (12) located on the inner circumference for feeding and securing the fiber optic cable and an eccentrically located cylindrical entry section (11), which is so situated in the separating plate (10) between the lower and center sections (5, 6) that the cylindrical entry section (11) also protrudes into the center section (6).

3. Connection socket arrangement according to Sections 1 and 2, **so identified** by the cable entry section (2) consisting mainly of two cylindrical entry sections (11), which are so constructed that they provide a means for directing and clamping the cable in the lower section (5), in the center or fiber storage section (6) for the guidance of the individual cores, and that an arrangement for the accommodation of the plug connector (3) for the location of the connector (19) is secured in at least one of the entry sections (11) in such a manner that it is secured against rotation.

4. Connection socket arrangement according to Section 3, **so identified** by the construction of raised notch elements (25), which engage with correspondingly slotted recesses (26) in the arrangement (3) for the accommodation of the plug connector (19) for the prevention of rotation on the circumference of the cylindrical connector.

5. Connection socket arrangement according to Sections 1 to 4, **so identified** by the provision in the connection socket lower section (5) of the cable strain relief element (14), which is constructed mainly as a multi-element cable strain relief strip and is secured against rotation in the intermediate space between both cylindrical entry sections (11).

6. Connection socket arrangement according to Section 5, **so identified** by the feeding with security against rotation of a strain relief finger (16) of the cable strain relief element (14) between two bridge shaped clamping elements (12).

7. Connection socket arrangement according to Sections 1 to 6, **so identified** by the additional securing by means of a cable tie of the fiber optic cable and / or the individual fiber cores.

8. Connection socket arrangement according to Sections 1 to 7, **so identified** by the construction in such a manner that the cable entry and throughway (13) of the lower section (5) can also accommodate cable with pre-fitted connectors.

9. Connection socket arrangement according to Sections 1 to 8, **so identified** by the provision in the fiber core guide section (6) of guidance, clamping and coiling of the fiber cores with the provision of a reserve length of fiber core, by the provision of securing elements (18) on the internal circumference of the cable entry section (2) and the external periphery of the cylindrical entry section (11) so that a storage space for coiling the fiber cores is produced between the separating plate (10) between lower and center sections (5, 6), the clamping elements (18) and the cylindrical entry section (11) and that the clamping elements (18) form the boundary of the center section (6).

10. Connection socket arrangement according to Sections 1 to 9, **so identified** by the provision of splicing receptacles (21) in the center section (6) mainly in the intermediate space between both cylindrical entry sections (11).

11. Connection socket arrangement according to Section 10, **so identified** by the provision of two splice receptacles (21) opposite each other for the accommodation of a maximum of four splices each.

12. Connection socket arrangement according to Sections 1 to 11, **so identified** by the presence of an arrangement (3) for the acceptance of the connector (19) from a cylindrical coupling insert (22), a coupling plate (23) complete with clamping pillars (33) and a cover plate (24), which are so dimensioned and constructed that the arrangement for the accommodation of the plug connector (3) is both insertable within a cylindrical entry section (11) or mountable upon a commercially available cover frame (4).

13. Connection socket arrangement according to Section 12, **so identified** by the provision of a cylindrical coupling insert (22) consisting of a clamping section (27) projecting into the entry section (11) and a coupling section (28) standing at least partially proud above the cable entry section (2).

14. Connection socket arrangement according to Sections 12 and 13, **so identified** by the provision of a securing section (27) principally of four slotted openings (26) for insertion into the entry section (11), optionally at 90° offsets and secured against rotation.

15. Connection socket arrangement according to Sections 12 to 14, **so identified** by the arrangement in the inside of the cylindrical securing section (27) of a throughway (29) for a clamping screw (38), which is joined to the securing section (27) by a series of spokes.

16. Connection socket arrangement according to Section 15, **so identified** by the joining of the spoked clamping element (30) with a finger shaped section of the securing section (27) through the slotted opening (26), whereby the spoked clamping element (30) is executed at an angle less than 90° obliquely inclined to the inside.

17. Connection socket arrangement according to Sections 12 to 16, **so identified** by the provision in the coupling section (28) of the guide channels (20) for fiber core guidance, the paths being provided with a prescribed radius.

18. Connection socket arrangement according to Sections 12 to 17, **so identified** by the provision and arrangement of clamping elements (31) in the coupling section (28) for the releasable securing of the coupling plate (23) in such a way that the fiber optic cable connector (19) in the coupling plate (23) is secured at an angle of less than 90° in the connection socket arrangement.

19. Connection socket arrangement according to Section 18, **so identified** by the joining to the coupling plate (23) of clamping pillars (33) provided with mating elements (32) that engage with corresponding mating sections (31) on the coupling section (28), whereby the arrangement of the mating elements (31) defines the inclined position of the connector (19).

20. Connection socket arrangement according to Sections 12 to 19, **so identified** by the provision in the coupling plate (23) of connector receptacles that match up with the relevant mating connectors (19) in terms of form and size and also in number.

21. Connection socket arrangement according to Sections 12 to 21, **so identified** by the provision of a sloped cover plate (24) that matches with the sloped connector (19).

22. Connection socket arrangement according to Sections 12 to 21, **so identified** by the provision on the cover plate (24) of an opening (35) for a securing element (38), the opening in the cover plate (35) being so arranged and constructed that the securing element (38) secures the complete plug connector assembly (3) in the cable entry section (2) onto the cover frame.

23. Connection socket arrangement according to Section 22, **so identified** by both the construction of the throughway (29) for the securing element (38) of the coupling insert (22) and also the cover plate (24) as an opening for the accommodation of a screw (38).

24. Connection socket arrangement according to Section 12 to 23, **so identified** by the provision on the cover plate (24) in the region of the opening (35) for the securing element (38) of a recessed channel for employment as a designation surface.

25. Connection socket arrangement according to Sections 12 to 24, **so identified** by the provision in the cover plate (24) of securing elements (36) for affixing the coupling plate (23).

26. Connection socket arrangement according to Sections 1 to 25, **so identified** by the formation of a connection section (7) from the intermediate space between the clamping element (18) of the center storage space (6) and the mating surface (8) of the cover frame (4) on the cable entry section (2).

## Revendications

1. Disposition de boîtes de jonction à fibres optiques pour le montage de préférence dans des boîtes goulottes, des boîtes encastrées et des boîtes en applique vendues dans le commerce, prévues pour le raccordement des lignes électriques ainsi que dans les boîtiers d'appareils, composée pour l'essentiel d'une boîte murale, d'une garniture de passage de câble sur laquelle sont disposés des éléments de fixation, un cadre de recouvrement et une disposition servant à l'adaptation des connecteurs à fibres optiques, **caractérisée en ce que** la boîte murale est constituée comme une double boîte (1) dans laquelle est mise en place la garniture de passage de câble (2) adaptée à la forme et à la taille de la double boîte (1), garniture qui sépare la boîte de jonction en trois espaces d'adaptation (5, 6, 7) en même temps qu'au moins une disposition (3) pour l'adaptation d'au moins un connecteur à fiches (19) ; en trois espaces, à savoir, un espace inférieur d'adaptation du câble (5) et un espace central d'adaptation des fibres (6), les deux étant formés par une platine de séparation (10) de la garniture de passage de câble (2), ainsi qu'un espace de raccordement supérieur (7) qui est formé entre la disposition (3) servant à adapter au moins un connecteur à fibres optiques (19) et la garniture de passage de câble (2),
**en ce que** l'espace d'adaptation du câble (5) présente des moyens de décharge de traction (14) et des éléments de blocage (12) servant de guidage de décharge de la traction du câble de fibres optiques
en ce que l'espace d'adaptation des fibres (6) est équipé de moyens (9, 11, 18) servant à l'adaptation et au guidage des différentes fibres individuellement tout en formant une réserve de câble,
**en ce que** l'espace de raccordement (7) présente des moyens (20, 22) servant à guider les différentes fibres individuellement vers et pour la connexion avec le ou les connecteurs à fiches respectifs des fibres optiques (19)
en ce que les espaces (5, 6, 7) sont formés de manière à ce que le câble et les différentes fibres individuellement sont guidés en respectant le rayon de flexion minimum prescrit et
**en ce que** la disposition (3) servant à l'adaptation du ou des connecteurs à fiches (19) est fixée sur la garniture de passage de câble (2) de telle sorte qu'elle peut être déplacée ou tournée sur un axe.

2. Disposition de la boîte de jonction selon la revendication 1,
**caractérisée en ce que** la garniture de passage de câble (2) présente dans son espace inférieur (5) à chaque fois au moins une entrée de câble, une traversée (13) pour faire passer le câble ou les différentes fibres dans l'espace central (6), un élément de blocage (12) disposé dans l'ensemble intérieur pour guider et bloquer le câble de fibres optiques et une pièce d'adaptation cylindrique excentrique (11) qui est disposée dans la platine de séparation (10) entre l'espace inférieur et l'espace central (5, 6) de telle sorte que la pièce d'adaptation cylindrique (11) parvient également dans l'espace central (6).

3. Disposition de la boîte de jonction selon les revendications 1 et 2,
**caractérisé en ce que** la garniture de passage de câble (2) présente de préférence deux pièces d'adaptation cylindriques (11) qui sont formées de manière à ce qu'elles servent dans l'espace inférieur (5) à guider et bloquer le câble, dans l'espace central (6) à guider les différentes fibres individuellement et à ce qu'au moins dans l'une des pièces d'adaptation (11) une disposition (3) soit fixée sans risque de torsion pour adapter les connecteurs à fiches (19).

4. Disposition de la boîte de jonction selon la revendication 3,
**caractérisée en ce que** sont formés des éléments à enclenchement (25) servant de protection contre le risque de torsion sur l'ensemble intérieur de la pièce d'adaptation cylindrique, éléments dans lesquels des évidements correspondants en forme de rainures (26) s'engrènent dans la disposition (3) pour adapter les connecteurs à fiches (19).

5. Disposition de la boîte de jonction selon les revendications 1 à 4
**caractérisée en ce que** dans l'espace inférieur (5) de la boîte de jonction se trouve l'élément de décharge de traction du câble (14) qui est formé de préférence comme une pince de décharge de traction à plusieurs côtés et qui est fixé sans risque de torsion dans l'espace intermédiaire entre les deux pièces d'adaptation cylindriques (11).

6. Disposition de la boîte de jonction selon la revendication 5
**caractérisée en ce que** une branche (16) de la pince de décharge de traction (14) est guidée sans risque de torsion entre deux éléments de blocage (12).

7. Disposition de la boîte de jonction selon les revendications 1 à 6
**caractérisée en ce que** le câble de fibres optiques et/ou les différentes fibres individuellement sont en outre maintenus à l'aide d'un serre-câble.

8. Disposition de la boîte de jonction selon les revendications 1 à 7
**caractérisée en ce que** l'entrée de câble et le passage (13) de l'espace d'adaptation du câble (5) sont formés de manière à ce que même les câbles comportant des connecteurs à fiches préconfectionnés puissent être introduits.

9. Disposition de la boîte de jonction selon les revendications 1 à 8
**caractériséeen ce que**, dans l'espace de passage des fibres (6), le passage, le maintien et l'enroulement des fibres se font moyennant la formation de longueurs de fibres de réserve par le fait que l'ensemble intérieur de la garniture de passage de câble (2) et l'ensemble extérieur des pièces d'adaptation cylindriques (11) présentent des éléments de blocage (18) de manière à ce qu'entre la platine de séparation (10) se trouvant entre l'espace inférieur et l'espace central (5, 6), les éléments de blocage (18) et les pièces d'adaptation cylindriques (11) se crée un espace pour l'enroulement des fibres et de manière à ce que les éléments de blocage (18) limitent l'espace central (6).

10. Disposition de la boîte de jonction selon les revendications 1 à 9
**caractérisée en ce que**, l'espace central (6) comporte des supports d'épissures (21) de préférence dans l'espace intermédiaire entre les deux pièces d'adaptation cylindriques (11).

11. Disposition de la boîte de jonction selon la revendication 10
**caractérisée en ce que** de préférence deux supports d'épissures (21) se trouvant l'un en face de l'autre sont prévus pour l'adaptation d'un maximum de quatre épissures chacun.

12. Disposition de la boîte de jonction selon les revendications 1 à 11
**caractérisée en ce que** la disposition (3) servant à l'adaptation des connecteurs à fiches (19) est constituée d'une garniture d'accouplement cylindrique (22), d'une platine d'accouplement (23) équipée d'éléments de fixation (33) et d'un capuchon de recouvrement (24) qui sont dimensionnés et formés de manière à ce que la disposition (3) soit utilisable tant dans une pièce d'adaptation cylindrique (11) qu'être appliquée dans un cadre de recouvrement vendu dans le commerce (4) sur la disposition de la boîte de jonction.

13. Disposition de la boîte de jonction selon la revendication 12
**caractérisée en ce que** la garniture d'accouplement cylindrique (22) se compose d'une pièce de fixation (27) comprise dans la pièce d'adaptation (11) et d'une pièce d'accouplement (28) dépassant au moins partiellement au-dessus de la garniture de passage de câble (2).

14. Disposition de la boîte de jonction selon les revendications 12 et 13
**caractérisée en ce que** la pièce de fixation (27) est équipée de préférence de quatre évidements (26) en forme de rainures pour mettre en place dans la pièce d'adaptation (11) soit de façon décalée à 90° soit protégée contre le risque de torsion.

15. Disposition de la boîte de jonction selon les revendications 12 à 14
**caractérisée en ce que** qu'à l'intérieur de la pièce de fixation cylindrique (27) se trouve une adaptation (29) pour un élément de fixation (38) qui est reliée en forme de rayon à la pièce de fixation (27).

16. Disposition de la boîte de jonction selon la revendication 15
**caractérisée en ce que** de préférence à chaque fois un élément de fixation en forme de rayon (30) est relié avec une section de la pièce de fixation (27) sous forme de branche et façonnée par les évidements en rainures sachant que les éléments de fixation en forme de rayon (30) sont inclinés vers l'intérieur en oblique sur un angle inférieur à 90°.

17. Disposition de la boîte de jonction selon les revendications 12 à 16
**caractérisée en ce que** la pièce d'accouplement (28) est équipée, pour le passage des fibres, de canaux de guidage (20) dont le déroulement se fait sous un rayon prédéfini.

18. Disposition de la boîte de jonction selon les revendications 12 à 17
**caractérisée en ce que** des éléments de fixation (31) servant à la fixation amovible de la platine d'accouplement (23) sont disposés sur la pièce d'accouplement (28) et sont formés de manière à ce que les connecteurs à fiches de fibres optiques (19) utilisés dans la platine d'accouplement (23) sont fixés sur un angle inférieur à 90° dans la disposition de la boîte de jonction.

19. Disposition de la boîte de jonction selon la revendication 18
**caractérisée en ce que** sont reliées à la platine d'accouplement (23) des traverses de fixation (33) qui présentent des éléments d'enclenchement (32) qui s'engrène dans les contre-éléments de forme correspondante (31) de la pièce d'accouplement (28), sachant que la disposition des contre-éléments (31) indique la position développée des connecteurs à fiches (19).

20. Disposition de la boîte de jonction selon les revendications 12 à 19
**caractérisée en ce que** la platine d'accouplement (23) présente des passages (34) qui sont adaptés aux connecteurs à fiches (19) devant être utilisés à chaque fois tant dans leur forme que dans leur taille et leur nombre.

21. Disposition de la boîte de jonction selon les revendications 12 à 20
**caractérisée en ce que** le capuchon de recouvrement (24) présente une forme plate comme un toit adaptée aux connecteurs à fiches (19) utilisés développés.

22. Disposition de la boîte de jonction selon les revendications 12 à 21
**caractérisée en ce que** le capuchon de recouvrement (24) présente une adaptation (35) pour un élément de fixation (38) qui est disposé et formé de manière à ce que l'élément de fixation (38) fixe sur celui-ci l'ensemble de la disposition (3) pour l'adaptation des connecteurs à fiches (19) dans la garniture de passage de câble (2) et les cadres de recouvrement (4).

23. Disposition de la boîte de jonction selon la revendication 22
**caractérisée en ce que** tant l'adaptation (29) pour l'élément de fixation (38) de la garniture d'accouplement (22) que celle du capuchon de recouvrement (24) sont formées comme passage pour insérer une vis (38).

24. Disposition de la boîte de jonction selon les revendications 12 à 23
**caractérisée en ce que** le capuchon de recouvrement (24) au niveau de l'adaptation (35) pour l'élément de fixation (38) est équipé d'un évidement (37) en forme de rainure pour constituer un champ d'inscription.

25. Disposition de la boîte de jonction selon les revendications 12 à 24
**caractérisée en ce que** dans le capuchon de recouvrement (24) se trouvent des éléments de blocage (36) servant à la fixation de la platine d'accouplement (23).

26. Disposition de la boîte de jonction selon les revendications 1 à 25
**caractérisée en ce que** l'espace de raccordement (7) est formé de l'espace intermédiaire entre les éléments de blocage (18) de l'espace central (6) et la surface de dépose (8) du cadre de recouvrement (4) sur la garniture de passage de câble (2).
